# EUROPÄISCHE PATENTSCHRIFT

(11) **EP 3 391 343 B1**
(45) Veröffentlichungstag und Bekanntmachung des Hinweises auf die Patenterteilung: **10.04.2024**
(21) Anmeldenummer: 16809793.9
(22) Anmeldetag: 09.12.2016
(51) Int. Cl.: G07D 7/121, H04N 1/409

(54) **BILDAUFNAHMESYSTEM UND VERFAHREN ZUR BILDAUFNAHME EINES IDENTIFIKATIONSDOKUMENTS**
SYSTEM AND METHOD OF RECORDING IMAGES OF IDENTIFICATION DOCUMENT
SYSTEME DE PRISE D'IMAGE ET PROCEDE DE PRISE D'IMAGE D'UN DOCUMENT D'IDENTIFICATION

(30) Priorität: 17.12.2015 DE 102015122059
(43) Veröffentlichungstag der Anmeldung: 24.10.2018
(73) Patentinhaber: Bundesdruckerei GmbH, 10969 Berlin (DE)
(72) Erfinder: HERRMANN, Klaus, 30625 Hannover (DE); FRANEK, Lucas, 30419 Hannover (DE)
(74) Vertreter: Patentship Patentanwaltsgesellschaft mbH
(86) Internationale Anmeldenummer: PCT/EP2016/080466
(87) Internationale Veröffentlichungsnummer: WO 2017/102590

(56) Entgegenhaltungen:
- US-A1- 2001 002 850
- US-A1- 2001 002 850
- US-A1- 2005 129 282
- US-A1- 2005 129 282
- US-A1- 2009 154 813
- US-A1- 2012 263 395
- US-A1- 2012 263 395
- US-B2- 7 925 096
- US-B2- 7 925 096

## Beschreibung

Die vorliegende Erfindung betrifft das Gebiet der Bildaufnahme eines Identifikationsdokuments.

Die Offenlegungsschrift US 2005/129282 A1 beschreibt ein Verfahren und eine Vorrichtung zum Verifizieren eines Hologramms und einer Kreditkarte.

Die Patentschrift US 7,925,096 B2 beschreibt ein Verfahren und eine Vorrichtung zum Validieren von Hologrammen.

Die Offenlegungsschrift US 2012/263395 A1 beschreibt eine Abbildungsvorrichtung.

Die Offenlegungsschrift US 2001/002850 A1 beschreibt eine Digitalkamera.

Bildaufnahmesysteme, insbesondere Dokumentenlesegeräte, können Bildaufnahmen eines Identifikationsdokuments in unterschiedlichen Lichtspektren, beispielsweise im Weißlichtbereich zwischen 380 nm und 780 nm, aufnehmen. In den Bildaufnahmen können jedoch Merkmale des Identifikationsdokuments, beispielsweise ein Lichtbild oder Daten in einer Visual Inspection Zone (VIZ), von Lichtreflexionen überdeckt werden.

Die Lichtreflexionen können Glanzlichter oder Lichtreflexionen an Hologrammen des Identifikationsdokuments sein und aufgrund einer Beleuchtung des Identifikationsdokuments bei der Bildaufnahme entstehen.

Lichtreflexionen in den Bildaufnahmen des Identifikationsdokuments können durch spezielle Gehäuse des Bildaufnahmesystems oder durch Beleuchtung mit diffusem Licht vermieden werden. Aus Kostengründen oder aufgrund bestimmter Anforderungen an das Gehäusedesign sind solche Lösungen jedoch nicht immer möglich. Die Lichtreflexionen in den Bildaufnahmen mit Hilfe von Bildverarbeitungsverfahren im Nachhinein zu entfernen ist schwierig.

Es ist daher die Aufgabe der vorliegenden Erfindung, wie definiert in Ansprüche 1 und 14, ein effizientes Konzept zur Bildaufnahme eines Identifikationsdokuments zu schaffen.

Diese Aufgabe wird durch die Merkmale der unabhängigen Ansprüche gelöst. Vorteilhafte Weiterbildungsformen sind Gegenstand der abhängigen Ansprüche.

Die vorliegende Erfindung basiert auf der Erkenntnis, dass die obige Aufgabe durch ein Aufnehmen einer ersten Bildaufnahme des Identifikationsdokuments bei Beleuchtung mit einem ersten Licht und einer zweiten Bildaufnahme des Identifikationsdokuments bei Beleuchtung mit einem zweiten Licht, einem Erfassen einer Lichtreflexion in einem Bildabschnitt der ersten Bildaufnahme und einem Überlagern des Bildabschnitts mit einem entsprechenden Bildabschnitt der zweiten Bildaufnahme gelöst werden kann.

Gemäß einem ersten Aspekt betrifft die Erfindung ein Bildaufnahmesystem zur Bildaufnahme eines Identifikationsdokuments, mit einer Dokumentenauflage für das Identifikationsdokument, einer Beleuchtungseinrichtung zum Beleuchten der Dokumentenauflage mit einem ersten Licht und einem zweiten Licht, einer Bildaufnahmekamera, welche ausgebildet ist, eine erste Bildaufnahme des Identifikationsdokuments bei Beleuchtung mit dem ersten Licht und eine zweite Bildaufnahme des Identifikationsdokuments bei Beleuchtung mit dem zweiten Licht aufzunehmen, und einem Prozessor, welcher ausgebildet ist, eine Lichtreflexion in einem Bildabschnitt der ersten Bildaufnahme zu erfassen, und ansprechend auf die Erfassung der Lichtreflexion den Bildabschnitt der ersten Bildaufnahme mit einem entsprechenden Bildabschnitt der zweiten Bildaufnahme zu überlagern, um eine korrigierte erste Bildaufnahme zu erhalten. Dadurch wird der Vorteil erreicht, dass eine Bildaufnahme des Identifikationsdokuments ohne die Lichtreflexion effizient erzeugt werden kann.

Das Identifikationsdokument kann eines der folgenden Identifikationsdokumente sein: Identitätsdokument, wie Personalausweis, Reisepass, Zugangskontrollausweis, Berechtigungsausweis, Unternehmensausweis, Steuerzeichen oder Ticket, Führerschein oder Kraftfahrzeugausweis, Zahlungsmittel, beispielsweise eine Bankkarte oder Kreditkarte. Das Identifikationsdokument kann Sicherheitsmerkmale, beispielsweise Hologramme, Wasserzeichen, Mikroschriften oder optisch veränderliche Tinte, umfassen. Das Identifikationsdokument kann ein- oder mehrlagig bzw. papier- und/oder kunststoffbasiert sein. Das Identifikationsdokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen. Ferner kann das Identifikationsdokument aus Polycarbonat gefertigt sein.

Die Dokumentenauflage kann eine Ablagefläche mit einer Vertiefung für das Identifikationsdokument umfassen. Ferner kann die Dokumentenauflage eine Befestigungsvorrichtung, beispielsweise eine Klammer oder einen Einschub, für das Identifikationsdokument aufweisen. Die Dokumentenauflage kann in einem solchen Abstand zu der Beleuchtungseinrichtung angeordnet sein, dass das erste Licht und/oder das zweite Licht das Identifikationsdokument vollflächig beleuchten oder nur einen bestimmten Bereich des Identifikationsdokuments, beispielsweise den Bereich eines Lichtbildes, beleuchten.

Der Prozessor kann ein Mikroprozessor sein. Ferner kann der Prozessor in ein an das Bildaufnahmesystem angeschlossenes Datenverarbeitungsgerät, beispielsweise ein Desktop-Computer oder ein Laptop, integriert sein.

Der Bildabschnitt kann einen oder eine Vielzahl an Bildpunkten, insbesondere Bildpixel, der Bildaufnahme umfassen.

Die Lichtreflexion kann ein Glanzlicht auf der Oberfläche des Identifikationsdokuments sein, welches beispielsweise aufgrund einer starken Reflexion des ersten Lichtes an einem Oberflächenabschnitt des Identifikationsdokuments entsteht. Ferner kann die Lichtreflexion an einem Hologramm des Identifikationsdokuments auftreten. Die Lichtreflexion kann ein- oder mehrfarbig sein.

Das Bildaufnahmesystem kann ein Dokumentenlesegerät sein.

Der Prozessor ist ausgebildet, zur Erfassung der Lichtreflexion ein Differenzbild der ersten Bildaufnahme und der zweiten Bildaufnahme zu erzeugen, und die Lichtreflexion in dem entsprechenden Bildabschnitt des Differenzbildes zu erfassen, wenn eine Bildcharakteristik, insbesondere eine Bildhelligkeit, in dem Bildabschnitt des Differenzbildes einen Schwellwert erreicht. Dadurch wird der Vorteil erreicht, dass die Lichtreflexion effizient erfasst werden kann.

Das Differenzbild der ersten Bildaufnahme und der zweiten Bildaufnahme kann durch Subtraktion der Bildhelligkeit an jedem Bildpunkt der zweiten Bildaufnahme von der Bildhelligkeit an jedem entsprechenden Bildpunkt der ersten Bildaufnahme erzeugt werden.

Der Prozessor kann ausgebildet sein, zur Erfassung der Lichtreflexion ein globales Schwellwertverfahren, beispielsweise auf der Basis eines empirisch bestimmten festen Schwellwerts oder eines Schwellwerts, der durch ein Otsu-Schwellwertverfahren bestimmt wird, durchzuführen. Der Prozessor kann ferner ausgebildet sein, im Anschluss an das Schwellwertverfahren ein Dilatationsverfahren durchzuführen, bei dem der Bildabschnitt mit der Lichtreflexion vergrößert wird, insbesondere um eine Anzahl an Bildpixel um den Bildabschnitt vergrößert wird, um eine Artefaktbildung in der korrigierten ersten Bildaufnahme zu vermeiden.

Gemäß einer Ausführungsform ist der Prozessor ausgebildet, bei Erfassung der Lichtreflexion in dem Bildabschnitt ein Überlagerungsbild des Bildabschnitts zu erzeugen, wobei der Prozessor ausgebildet ist, in dem Überlagerungsbild Bildpunkte des Bildabschnitts der ersten Bildaufnahme durch Bildpunkte des entsprechenden Bildabschnitts der zweiten Bildaufnahme zu ersetzen, um ein verarbeitetes Überlagerungsbild mit Bildpunkten des entsprechenden Bildabschnitts der zweiten Bildaufnahme zu erhalten.

Gemäß einer Ausführungsform ist der Prozessor ausgebildet, die erste Bildaufnahme mit dem verarbeiteten Überlagerungsbild der ersten Bildaufnahme zu überlagern, um die korrigierte ersten Bildaufnahme zu erhalten. Dadurch wird der Vorteil erreicht, dass die korrigierte erste Bildaufnahme des Identifikationsdokuments ohne die Lichtreflexion effizient erzeugt werden kann.

Gemäß einer Ausführungsform ist der Prozessor ausgebildet, eine weitere Lichtreflexion in einem weiteren Bildabschnitt der zweiten Bildaufnahme zu erfassen, und ansprechend auf die Erfassung der weiteren Lichtreflexion den weiteren Bildabschnitt der zweiten Bildaufnahme mit einem entsprechenden weiteren Bildabschnitt der ersten Bildaufnahme zu überlagern, um eine korrigierte zweite Bildaufnahme zu erhalten. Dadurch wird der Vorteil erreicht, dass die korrigierte zweite Bildaufnahme des Identifikationsdokuments ohne die weitere Lichtreflexion effizient erzeugt werden kann.

Gemäß einer Ausführungsform ist der Prozessor ausgebildet, zur Erfassung der weiteren Lichtreflexion ein weiteres Differenzbild der zweiten Bildaufnahme und der ersten Bildaufnahme zu erzeugen, und den entsprechenden Bereich der Lichtreflexion der zweiten Bildaufnahme in dem entsprechenden weiteren Bildabschnitt des weiteren Differenzbildes zu erfassen, wenn die Bildcharakteristik, insbesondere die Bildhelligkeit, in dem weiteren Bildabschnitt des Differenzbildes einen weiteren Schwellwert erreicht. Dadurch wird der Vorteil erreicht, dass die weitere Lichtreflexion effizient erfasst werden kann.

Das weitere Differenzbild der zweiten Bildaufnahme und der ersten Bildaufnahme kann durch Subtraktion der Bildhelligkeit an jedem Bildpunkt der ersten Bildaufnahme von der Bildhelligkeit an jedem entsprechenden Bildpunkt der zweiten Bildaufnahme erzeugt werden.

Der Schwellwert und der weitere Schwellwert können gleich sein.

Gemäß einer Ausführungsform ist der Prozessor ausgebildet, bei Erfassung der weiteren Lichtreflexion in dem weiteren Bildabschnitt ein weiteres Überlagerungsbild des weiteren Bildabschnitts zu erzeugen, wobei der Prozessor ausgebildet ist, in dem weiteren Überlagerungsbild Bildpunkte des weiteren Bildabschnitts der zweiten Bildaufnahme durch Bildpunkte des entsprechenden weiteren Bildabschnitts der ersten Bildaufnahme zu ersetzen, um ein verarbeitetes weiteres Überlagerungsbild mit Bildpunkten des entsprechenden weiteren Bildabschnitts der ersten Bildaufnahme zu erhalten.

Gemäß einer Ausführungsform ist der Prozessor ausgebildet, die zweite Bildaufnahme mit dem verarbeiteten weiteren Überlagerungsbild der zweiten Bildaufnahme zu überlagern, um die korrigierte zweite Bildaufnahme zu erhalten. Dadurch wird der Vorteil erreicht, dass die korrigierte zweite Bildaufnahme des Identifikationsdokuments ohne die weitere Lichtreflexion effizient erzeugt werden kann.

Gemäß einer Ausführungsform ist der Prozessor ausgebildet, die korrigierte erste Bildaufnahme und die korrigierte zweite Bildaufnahme zu kombinieren, insbesondere mittels Mittelung der jeweiligen Bildpunkte zu kombinieren, um eine korrigierte Bildaufnahme des Identifikationsdokuments zu erhalten. Dadurch wird der Vorteil erreicht, dass eine Bildaufnahme des Identifikationsdokuments ohne die Lichtreflexion oder die weitere Lichtreflexion effizient erzeugt werden kann. Ferner kann durch die Mittelung ein Bildrauschen in der korrigierten Bildaufnahme verringert werden.

Bei der Mittelung kann ein Bildparameter, insbesondere die Bildhelligkeit, an jedem Bildpixel der ersten korrigierten Bildaufnahme mit dem Bildparameter an dem entsprechenden Bildpixel der zweiten korrigierten Bildaufnahme addiert und das Ergebnis durch die Anzahl der korrigierten Bildaufnahmen geteilt werden.

Gemäß einer Ausführungsform ist die Bildaufnahmekamera ausgebildet, die erste Bildaufnahme und/oder die zweite Bildaufnahme als mehrfarbige Bildaufnahmen, insbesondere als RGB- Bildaufnahmen, aufzunehmen.

Gemäß einer Ausführungsform ist die erste Bildaufnahme durch eine Mischung von Farbkanälen mehrfarbig, wobei der Prozessor ausgebildet ist, die Lichtreflexion in dem Bildabschnitt für jeden Farbkanal der mehrfarbigen ersten Bildaufnahme getrennt zu erfassen, wobei der Prozessor ausgebildet ist, die Lichtreflexion in dem Bildabschnitt der ersten Bildaufnahme zu erfassen, wenn die Lichtreflexion in zumindest einem Farbkanal vorliegt. Dadurch wird der Vorteil erreicht, dass eine einfarbige Lichtreflexion, beispielsweise an einem Hologramm, in der ersten Bildaufnahme besonders effizient erfasst werden kann.

Gemäß einer Ausführungsform ist die zweite Bildaufnahme durch eine Mischung von Farbkanälen mehrfarbig, wobei der Prozessor ausgebildet ist, die weitere Lichtreflexion in dem weiteren Bildabschnitt für jeden Farbkanal der mehrfarbigen zweiten Bildaufnahme getrennt zu erfassen, wobei der Prozessor ausgebildet ist, die weitere Lichtreflexion in dem weiteren Bildabschnitt der zweiten Bildaufnahme zu erfassen, wenn die weitere Lichtreflexion in zumindest einem Farbkanal vorliegt. Dadurch wird der Vorteil erreicht, dass eine einfarbige weitere Lichtreflexion, beispielsweise an einem Hologramm, in der zweiten Bildaufnahme besonders effizient erfasst werden kann.

Gemäß einer Ausführungsform umfasst die Beleuchtungseinrichtung eine erste Lichtquelle zum Erzeugen des ersten Lichtes und eine zweite Lichtquelle zum Erzeugen des zweiten Lichtes, wobei die erste Lichtquelle und die zweite Lichtquelle an gegenüberliegenden Seiten der Bildaufnahmekamera angeordnet sind. Dadurch wird der Vorteil erreicht, dass sich die Lichtreflexe an unterschiedlichen Stellen befinden.

Bei der ersten Lichtquelle und der zweiten Lichtquelle kann es sich um nicht diffuse Lichtquellen, insbesondere LEDs oder OLEDs, handeln.

Gemäß einer Ausführungsform ist die Beleuchtungseinrichtung ausgebildet, die Dokumentenauflage mit dem ersten Licht aus einem ersten Beleuchtungswinkel und mit dem zweiten Licht aus einem zweiten Beleuchtungswinkel zu beleuchten. Dadurch wird der Vorteil erreicht, dass die jeweilige Lichtreflexion in der ersten Bildaufnahme und der zweiten Bildaufnahme an zwei unterschiedlichen Bildabschnitten auftreten können, so dass eine effiziente Überlagerung des jeweiligen Bildabschnitts mit der Lichtreflexion mit dem entsprechenden Bildabschnitt der jeweils anderen Bildaufnahme erfolgen kann.

Die Beleuchtungseinrichtung kann ausgebildet sein, das erste Licht und/oder das zweite Licht unter einem Beleuchtungswinkel von 10°, 20°, 30°, 40°, 50°, 60° oder 70° in Richtung der Dokumentenauflage auszusenden.

Gemäß einer Ausführungsform ist die Beleuchtungseinrichtung ausgebildet, das erste Licht und das zweite Licht sequentiell in der Form von Lichtblitzen zu erzeugen. Die erste Lichtquelle und die zweite Lichtquelle können für eine Blitzbeleuchtung der Dokumentenauflage ausgebildet sein.

Gemäß einer Ausführungsform ist die Beleuchtungseinrichtung ausgebildet, das erste Licht und das zweite Licht in einem der folgenden Wellenlängenbereiche zu erzeugen: Weißlicht-Wellenlängenbereich, Infrarot-Wellenlängenbereich, Ultraviolett-Wellenlängenbereich.

Gemäß einer Ausführungsform umfasst die Beleuchtungseinrichtung eine Infrarotlichtquelle, insbesondere eine Nahinfrarotlichtquelle, und umfasst die Bildaufnahmekamera einen infrarotsensitiven Bildsensor. Dadurch wird der Vorteil erreicht, dass eine Infrarotbildaufnahme des Identifikationsdokuments aufgenommen werden kann, welche eine geringere Lichtreflexion aufweisen kann.

Gemäß einer Ausführungsform ist das Bildaufnahmesystem ausgebildet, die erste Bildaufnahme, die zweite Bildaufnahme und die korrigierte erste Bildaufnahme automatisch in einem Arbeitsgang zu erzeugen. Dadurch wird der Vorteil erreicht, dass eine effiziente Erzeugung der korrigierten Bildaufnahme des Identifikationsdokuments erfolgen kann. Ferner kann das Bildaufnahmesystem ausgebildet sein, in dem gleichen Arbeitsgang die korrigierte zweite Bildaufnahme und die korrigierte Bildaufnahme des Identifikationsdokuments zu erzeugen.

Gemäß einer Ausführungsform umfasst das Bildaufnahmesystem einen Speicher zum Speichern der ersten Bildaufnahme und/oder der zweiten Bildaufnahme.

Gemäß einem zweiten Aspekt betrifft die Erfindung ein Verfahren zur Bildaufnahme eines Identifikationsdokuments, wobei das Identifikationsdokument auf eine Dokumentenauflage auflegbar ist, mit Beleuchten der Dokumentenauflage mit einem ersten Licht und einem zweiten Licht, Aufnehmen einer ersten Bildaufnahme des Identifikationsdokuments bei Beleuchtung mit dem ersten Licht und einer zweiten Bildaufnahme des Identifikationsdokuments bei Beleuchtung mit dem zweiten Licht, Erfassen einer Lichtreflexion in einem Bildabschnitt der ersten Bildaufnahme, und ansprechend auf die Erfassung der Lichtreflexion, Überlagern des Bildabschnitts der ersten Bildaufnahme mit einem entsprechenden Bildabschnitt der zweiten Bildaufnahme, um eine korrigierte erste Bildaufnahme zu erhalten. Dadurch wird der Vorteil erreicht, dass eine Bildaufnahme des Identifikationsdokuments ohne die Lichtreflexion effizient erzeugt werden kann.

Die Erfindung kann in Hardware und/oder Software realisiert werden.

Weitere Ausführungsbeispiele werden Bezug nehmend auf die beiliegenden Zeichnungen näher erläutert. Es zeigen:
- Fig. 1: eine schematische Darstellung eines Bildaufnahmesystems zur Bildaufnahme eines Identifikationsdokuments;
- Fig. 2a: schematische Darstellungen einer ersten Bildaufnahme und einer zweiten Bildaufnahme;
- Fig. 2b: schematische Darstellungen eines Differenzbildes und eines weiteren Differenzbildes;
- Fig. 2c: schematische Darstellungen eines Überlagerungsbildes und eines weiteren Überlagerungsbildes;
- Fig. 2d: schematische Darstellungen einer korrigierten ersten Bildaufnahme und einer korrigierten zweiten Bildaufnahme;
- Fig. 3: ein Ablaufdiagramm eines Verfahrens zur Bildaufnahme eines Identifikationsdokuments;
- Fig. 4: ein Ablaufdiagramm eines Verfahrens zur Bildaufnahme eines Identifikationsdokuments; und

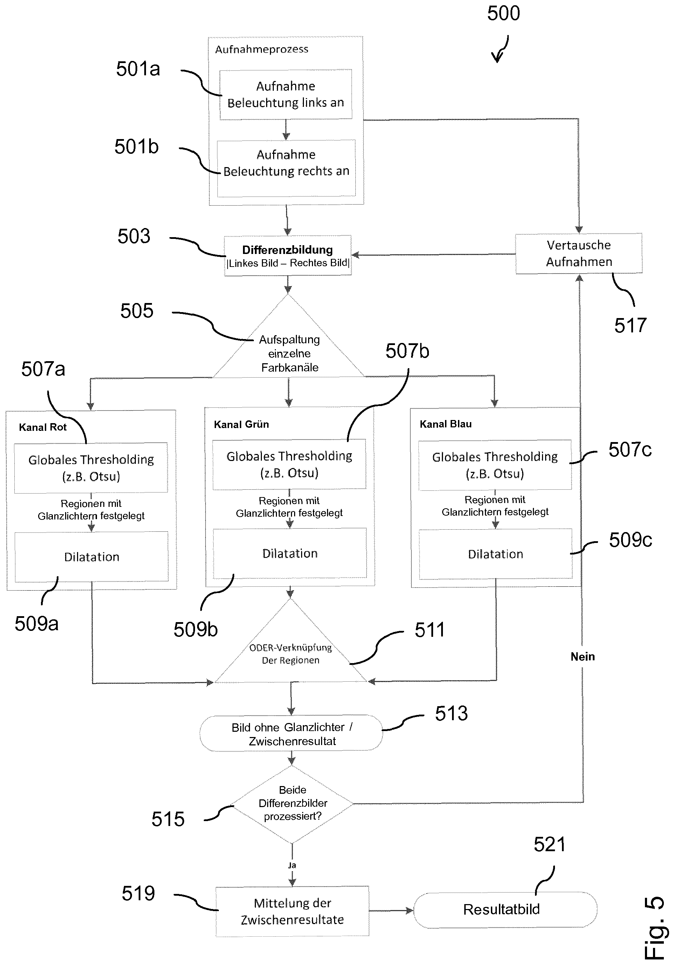

- Fig. 5: ein Ablaufdiagramm eines Verfahrens zur Bildaufnahme eines Identifikationsdokuments.

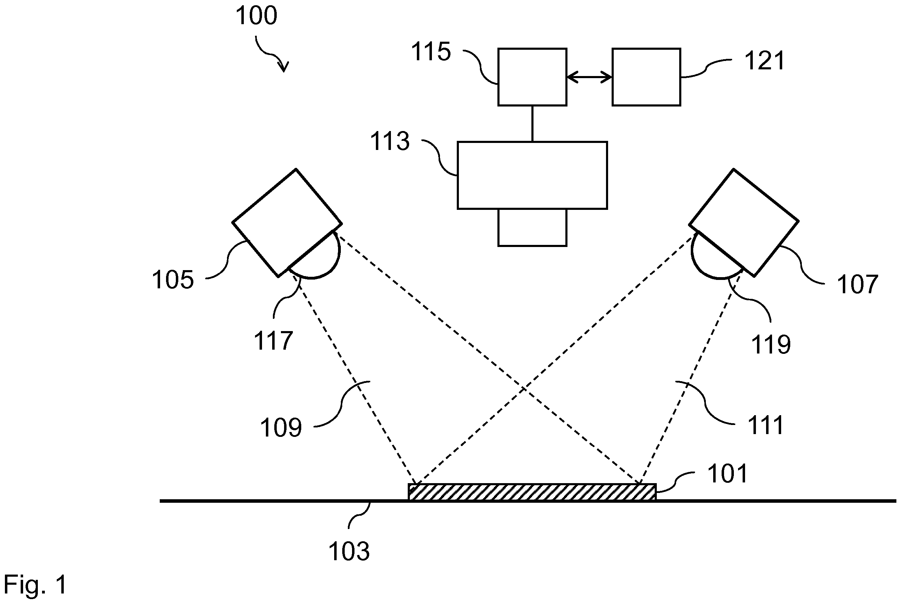

Fig. 1 zeigt eine schematische Darstellung eines Bildaufnahmesystems 100 zur Bildaufnahme eines Identifikationsdokuments 101 gemäß einer Ausführungsform.

Das Bildaufnahmesystem 100 umfasst eine Dokumentenauflage 103 für das Identifikationsdokument 101, eine Beleuchtungseinrichtung 105, 107 zum Beleuchten der Dokumentenauflage 103 mit einem ersten Licht 109 und einem zweiten Licht 111, eine Bildaufnahmekamera 113, welche ausgebildet ist, eine erste Bildaufnahme des Identifikationsdokuments 101 bei Beleuchtung mit dem ersten Licht 109 und eine zweite Bildaufnahme des Identifikationsdokuments 101 bei Beleuchtung mit dem zweiten Licht 111 aufzunehmen, und einen Prozessor 115, welcher ausgebildet ist, eine Lichtreflexion in einem Bildabschnitt der ersten Bildaufnahme zu erfassen, und ansprechend auf die Erfassung der Lichtreflexion den Bildabschnitt der ersten Bildaufnahme mit einem entsprechenden Bildabschnitt der zweiten Bildaufnahme zu überlagern, um eine korrigierte erste Bildaufnahme zu erhalten.

Das Identifikationsdokument 101 kann eines der folgenden Identifikationsdokumente sein: Identitätsdokument, wie Personalausweis, Reisepass, Zugangskontrollausweis, Berechtigungsausweis, Unternehmensausweis, Steuerzeichen oder Ticket, Führerschein oder Kraftfahrzeugausweis, Zahlungsmittel, beispielsweise eine Bankkarte oder Kreditkarte. Das Identifikationsdokument 101 kann Sicherheitsmerkmale, beispielsweise Hologramme, Wasserzeichen, Mikroschriften oder optisch veränderliche Tinte, umfassen.

Das Identifikationsdokument kann ein- oder mehrlagig bzw. papier- und/oder kunststoffbasiert sein. Das Identifikationsdokument 101 kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen. Ferner kann das Identifikationsdokument 101 aus Polycarbonat gefertigt sein.

Die Dokumentenauflage 103 kann eine Ablagefläche mit einer Vertiefung für das Identifikationsdokument 101 umfassen. Ferner kann die Dokumentenauflage 103 eine Befestigungsvorrichtung, beispielsweise eine Klammer oder einen Einschub, für das Identifikationsdokument 101 aufweisen. Die Dokumentenauflage 103 kann in einem solchen Abstand zu der Beleuchtungseinrichtung 105, 107 angeordnet sein, dass das erste Licht 109 und/oder das zweite Licht 111 das Identifikationsdokument 101 vollflächig beleuchten oder nur einen bestimmten Bereich des Identifikationsdokuments 101, beispielsweise den Bereich eines Lichtbildes, beleuchten.

Der Prozessor 115 kann ein Mikroprozessor sein. Ferner kann der Prozessor 115 in ein an das Bildaufnahmesystem 100 angeschlossenes Datenverarbeitungsgerät, beispielsweise ein Desktop-Computer oder ein Laptop, integriert sein.

Der Bildabschnitt kann einen oder eine Vielzahl an Bildpunkten, insbesondere Bildpixel, der Bildaufnahme umfassen.

Die Lichtreflexion kann ein Glanzlicht auf der Oberfläche des Identifikationsdokuments 101 sein, welches beispielsweise aufgrund einer starken Reflexion des ersten Lichtes an einem Oberflächenabschnitt des Identifikationsdokuments 101 entsteht. Ferner kann die Lichtreflexion an einem Hologramm des Identifikationsdokuments 101 auftreten. Die Lichtreflexion kann ein- oder mehrfarbig sein.

Das Bildaufnahmesystem 100 kann ein Dokumentenlesegerät sein.

Das Bildaufnahmesystem 100 in Fig. 1 umfasst ferner eine erste Lichtquelle 117 zum Erzeugen des ersten Lichtes 109 und eine zweite Lichtquelle 119 zum Erzeugen des zweiten Lichtes 111.

Die erste Lichtquelle 117 und die zweite Lichtquelle 119 können an gegenüberliegenden Seiten der Bildaufnahmekamera 113 angeordnet sein.

Die erste Lichtquelle 117 und die zweite Lichtquelle 119 können nicht diffuse Lichtquellen, insbesondere LEDs oder OLEDs, sein.

Die Beleuchtungseinrichtung 105, 107 kann ausgebildet sein, die Dokumentenauflage mit dem ersten Licht 109 aus einem ersten Beleuchtungswinkel und mit dem zweiten Licht 111 aus einem zweiten Beleuchtungswinkel zu beleuchten. Insbesondere können die erste Lichtquelle 117 und die zweite Lichtquelle 119 angeordnet sein, das erste Licht 109 in dem ersten Beleuchtungswinkel und das zweite Licht 111 in dem zweiten Beleuchtungswinkel in Richtung der Dokumentenauflage 103 auszusenden.

Die Beleuchtungseinrichtung 105, 107 bzw. die erste Lichtquelle 117 und die zweite Lichtquelle 119 können ausgebildet sein, das erste Licht 109 und/oder das zweite Licht 111 unter einem Beleuchtungswinkel von 10°, 20°, 30°, 40°, 50°, 60° oder 70° in Richtung der Dokumentenauflage 103 auszusenden.

Gemäß einer Ausführungsform sind die Beleuchtungseinrichtung 105, 107 bzw. die erste Lichtquelle 117 und die zweite Lichtquelle 119 ausgebildet, das erste Licht und das zweite Licht sequentiell in der Form von Lichtblitzen zu erzeugen. Zu diesem Zweck können die erste Lichtquelle 117 und die zweite Lichtquelle 119 für eine Blitzbeleuchtung der Dokumentenauflage 103 bzw. des Identifikationsdokuments 101 ausgebildet sein.

Die Beleuchtungseinrichtung 105, 107 bzw. die erste Lichtquelle 117 und die zweite Lichtquelle 119 können ausgebildet sein, das erste Licht 109 und das zweite Licht 111 in einem der folgenden Wellenlängenbereiche zu erzeugen: Weißlicht-Wellenlängenbereich, Infrarot-Wellenlängenbereich, Ultraviolett-Wellenlängenbereich.

Zur Erzeugung des ersten Lichtes 109 und des zweiten Lichtes 111 in dem Infrarot-Wellenlängenbereich kann die Beleuchtungseinrichtung 105, 107 eine Anzahl an Infrarotlichtquellen, insbesondere Nahinfrarotlichtquellen, umfassen. Insbesondere können die erste Lichtquelle 117 und die zweite Lichtquelle 119 Infrarotlichtquellen, beispielsweise Infrarot-LEDs, sein. Die Bildaufnahmekamera kann einen infrarotsensitiven Bildsensor umfassen, um die erste Bildaufnahme und die zweite Bildaufnahme des infrarotbeleuchteten Identifikationsdokuments 101 aufzunehmen.

Das Bildaufnahmesystem 100 in Fig. 1 umfasst ferner einen Speicher 121. Der Speicher 121 kann zum Speichern der ersten Bildaufnahme und/oder der zweiten Bildaufnahme ausgebildet sein.

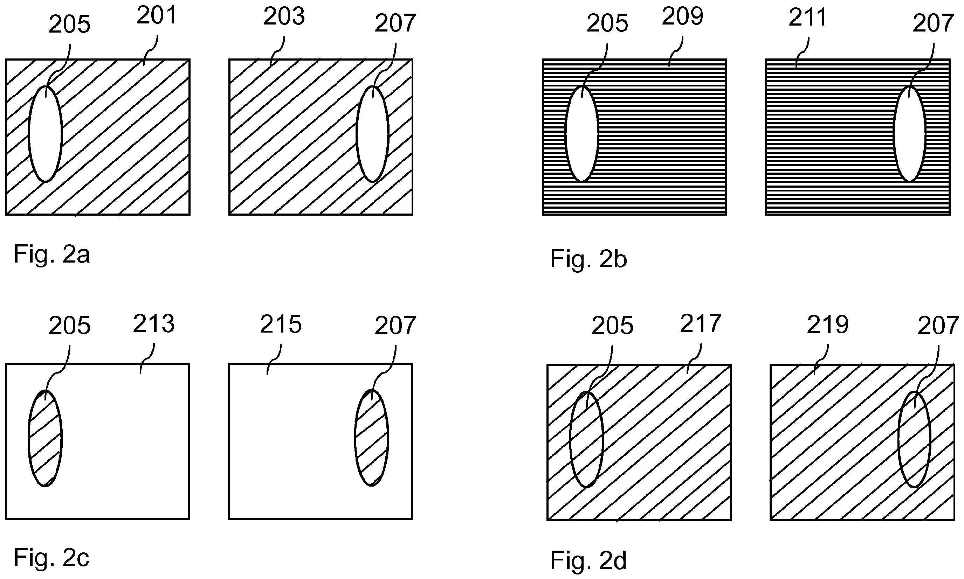

Fig. 2a zeigt schematische Darstellungen der ersten Bildaufnahme 201 und der zweiten Bildaufnahme 203, wobei die erste Bildaufnahme 201 eine Lichtreflexion in einem Bildabschnitt 205 umfasst und die zweite Bildaufnahme 203 eine weitere Lichtreflexion in einem weiteren Bildabschnitt 207 umfasst.

Die unterschiedliche Position der Bildabschnitte 205, 207 mit der jeweiligen Lichtreflexion in den Bildaufnahmen 201, 203 kann aus Unterschieden bei der Beleuchtung mit dem ersten Licht 109 und dem zweiten Licht 111, beispielsweise einen unterschiedlichen Beleuchtungswinkel des ersten Lichtes 109 und des zweiten Lichtes 111, resultieren.

Die Lichtreflexion in dem Bildabschnitt 205 und/oder die weitere Lichtreflexion in dem weiteren Bildabschnitt 207 können Glanzlichter oder Lichtreflexionen an Hologrammen des Identifikationsdokuments 101 sein.

Fig. 2b zeigt schematische Darstellungen eines Differenzbildes 209 der ersten Bildaufnahme 201 und eines weiteren Differenzbildes 211 der zweiten Bildaufnahme 203.

Der Prozessor 115 ist ausgebildet das Differenzbild 209 durch Subtraktion der Bildhelligkeit an jedem Bildpunkt der zweiten Bildaufnahme 203 von der Bildhelligkeit an jedem entsprechenden Bildpunkt der ersten Bildaufnahme 201 zu erzeugen. Der Prozessor 115 kann ferner ausgebildet sein, in gleicher Art und Weise das weitere Differenzbild 211 durch Subtraktion der Bildhelligkeit an jedem Bildpunkt der ersten Bildaufnahme 201 von der Bildhelligkeit an jedem entsprechenden Bildpunkt der zweiten Bildaufnahme 203 zu erzeugen.

Der Prozessor 115 kann ferner ausgebildet sein, die Lichtreflexion und/oder die weitere Lichtreflexion in den jeweiligen Bildabschnitten 205, 207 der Differenzbilder 209, 211 mittels eines Schwellwertverfahrens, insbesondere mittels eines globalen Schwellwertverfahrens, zu erfassen. Erfindungsgemäß ist der Prozessor 115 ausgebildet um die Lichtreflexionen in dem Bildabschnitt 205 des Differenzbildes 209 zu erfassen, wenn eine Bildcharakteristik, insbesondere eine Bildhelligkeit, einen Schwellwert erreicht und/oder die weitere Lichtreflexionen in dem weiteren Bildabschnitt 207 des weiteren Differenzbildes 211 zu erfassen, wenn die Bildcharakteristik, insbesondere die Bildhelligkeit, einen weiteren Schwellwert erreicht.

Der Schwellwert und der weitere Schwellwert können gleich sein.

Der Prozessor 115 kann ausgebildet sein, ein globales Schwellwertverfahren, beispielsweise ein Otsu-Schwellwertverfahren, auf das Differenzbild 209 und das weitere Differenzbild 211 anzuwenden.

Der Prozessor 115 kann ferner ausgebildet sein, im Anschluss an das Schwellwertverfahren ein Dilatationsverfahren durchzuführen. Bei dem Dilatationsverfahren können der Bildabschnitt 205 und/oder der weitere Bildabschnitt 207 mit der jeweils erfassten Lichtreflexion um eine Anzahl an Bildpunkten vergrößert werden. Die Bildpunkte können Bildpixel am Rand des Bildabschnitts 205 und/oder des weiteren Bildabschnitts 207 sein.

Fig. 2c zeigt schematische Darstellungen eines Überlagerungsbildes 213 des Bildabschnitts 205 und eines weiteren Überlagerungsbildes 215 des weiteren Bildabschnitts 207.

Der Prozessor 115 kann ausgebildet sein das Überlagerungsbild 213 und das weitere Überlagerungsbild 215 zu erzeugen.

Ferner kann der Prozessor 115 ausgebildet sein, in dem Überlagerungsbild 213 Bildpunkte des Bildabschnitts 205 der ersten Bildaufnahme 201 durch Bildpunkte des entsprechenden Bildabschnitts der zweiten Bildaufnahme 203 zu ersetzen, um ein verarbeitetes Überlagerungsbild 213 mit Bildpunkten des entsprechenden Bildabschnitts der zweiten Bildaufnahme 203 zu erhalten. Ferner kann der Prozessor 115 ausgebildet sein, in gleicher Art und Weise in dem weiteren Überlagerungsbild 215 Bildpunkte des weiteren Bildabschnitts 207 der zweiten Bildaufnahme 203 durch Bildpunkte des entsprechenden Bildabschnitts der ersten Bildaufnahme 201 ersetzt sein, um ein verarbeitetes weiteres Überlagerungsbild 215 mit Bildpunkten des entsprechenden Bildabschnitts der ersten Bildaufnahme 201 zu erhalten.

Fig. 2d zeigt schematische Darstellungen der korrigierten ersten Bildaufnahme 217 und der korrigierten zweiten Bildaufnahme 219.

Der Prozessor 115 kann ausgebildet sein, zur Erzeugung der korrigierten ersten Bildaufnahme 217 die erste Bildaufnahme 201 mit dem verarbeiteten Überlagerungsbild 213 zu überlagern. Ferner kann der Prozessor 115 ausgebildet sein, zur Erzeugung der korrigierten zweiten Bildaufnahme 219 die zweite Bildaufnahme 203 mit dem weiteren verarbeiteten Überlagerungsbild 215 zu überlagern.

Gemäß einer Ausführungsform ist der Prozessor 115 ausgebildet, das Differenzbild 209 und/oder das weitere Differenzbild 211, das Überlagerungsbild 213 und/oder das weitere Überlagerungsbild 215, sowie die korrigierte erste Bildaufnahme 217 und/oder die korrigierte zweite Bildaufnahme 219 in dem Speicher 121 zu speichern.

Gemäß einer weiteren Ausführungsform ist der Prozessor 115 ausgebildet, die korrigierte erste Bildaufnahme 217 und die korrigierte zweite Bildaufnahme 219 zu kombinieren, insbesondere mittels Bildaddition und/oder Mittelung der jeweiligen Bildpunkte der korrigierten ersten Bildaufnahme 217 und der korrigierten zweiten Bildaufnahme 219, zu kombinieren, um eine korrigierte Bildaufnahme des Identifikationsdokuments 101 zu erhalten. Durch die Kombination der korrigierten ersten Bildaufnahme 217 und der korrigierten zweiten Bildaufnahme 219 kann ein Bildrauschen reduziert werden.

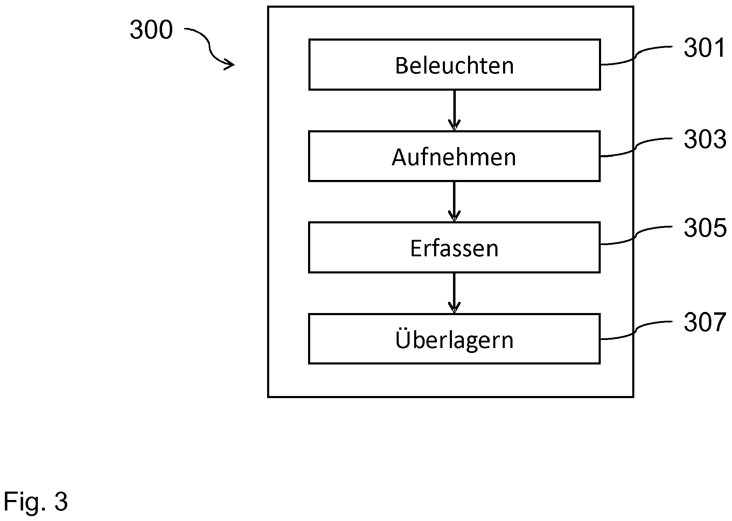

Fig. 3 zeigt ein Ablaufdiagramm eines Verfahrens 300 zur Bildaufnahme des Identifikationsdokuments 101, wobei das Identifikationsdokument 101 auf die Dokumentenauflage 103 auflegbar ist.

Das Verfahren 300 umfasst ein Beleuchten 301 der Dokumentenauflage 103 mit dem ersten Licht 109 und dem zweiten Licht 111, ein Aufnehmen 303 der ersten Bildaufnahme 201 des Identifikationsdokuments bei Beleuchtung mit dem ersten Licht 109 und der zweiten Bildaufnahme 203 des Identifikationsdokuments bei Beleuchtung mit dem zweiten Licht 111, ein Erfassen 305 der Lichtreflexion in dem Bildabschnitt 205 der ersten Bildaufnahme 201, und ansprechend auf die Erfassung der Lichtreflexion, ein Überlagern 307 des Bildabschnitts 205 der ersten Bildaufnahme 201 mit dem entsprechenden Bildabschnitt der zweiten Bildaufnahme 203, um die korrigierte erste Bildaufnahme 217 zu erhalten.

Das Verfahren 300 kann von dem Bildaufnahmesystem 100 durchgeführt werden.

Gemäß einer Ausführungsform ist das Bildaufnahmesystem 100 ausgebildet, die erste Bildaufnahme 201, die zweite Bildaufnahme 203 und die korrigierte erste Bildaufnahme 217 automatisch in einem Arbeitsgang zu erzeugen. Ferner kann das Bildaufnahmesystem 100 ausgebildet sein, in dem gleichen Arbeitsgang die korrigierte zweite Bildaufnahme 219 und die korrigierte Bildaufnahme des Identifikationsdokuments 101 zu erzeugen.

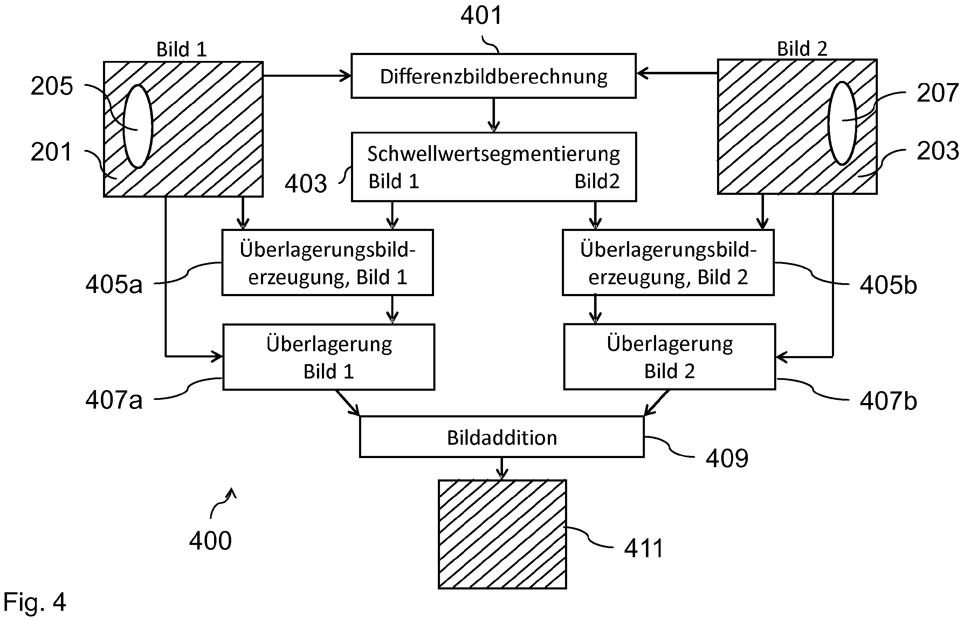

Fig. 4 zeigt ein Ablaufdiagramm eines Verfahrens 400 zur Bildaufnahme des Identifikationsdokuments 101 gemäß einer weiteren Ausführungsform, wobei in dem Verfahren 400 die korrigierte erste Bildaufnahme 217 und die korrigierte zweite Bildaufnahme 219 in einem Arbeitsgang erzeugt und kombiniert werden, um die korrigierte Bildaufnahme 411 des Identifikationsdokuments 101 zu erhalten.

Das Verfahren 400 umfasst eine Differenzbildberechnung 401 der ersten Bildaufnahme 201 und der zweiten Bildaufnahme 203, wobei bei der Differenzbildberechnung 401 das Differenzbild 209 der ersten Bildaufnahme 201 und der zweiten Bildaufnahme 203, sowie das weitere Differenzbild 211 der zweiten Bildaufnahme 203 und der ersten Bildaufnahme 201 erzeugt werden.

Das Verfahren 400 umfasst ferner eine Schwellwertsegmentierung 403 des ersten Differenzbildes 209 und des weiteren Differenzbildes 211 zur Erfassung der Lichtreflexion in dem Bildabschnitt 205 des Differenzbildes 209 bzw. der weiteren Lichtreflexion in dem weiteren Bildabschnitt 207 des weiteren Differenzbildes 211, ein Erzeugen 405a, 405b des Überlagerungsbildes 213 der ersten Bildaufnahme 201 und des weiteren Überlagerungsbildes 215 der zweiten Bildaufnahme 203, ein Überlagern 407a, 407b der ersten Bildaufnahme 201 mit dem verarbeiteten Überlagerungsbild 213 und der zweiten Bildaufnahme 203 mit dem verarbeiteten weiteren Überlagerungsbild 215, um die korrigierte erste Bildaufnahme 217 und die korrigierte zweite Bildaufnahme 219 zu erzeugen, und eine Bildaddition 409 der korrigierten Bildaufnahmen 217, 219 zur Erzeugung der korrigierten Bildaufnahme 411 des Identifikationsdokuments 101.

Das Verfahren 400 kann von dem Bildaufnahmesystem 100 durchgeführt werden.

Gemäß einer Ausführungsform des Bildaufnahmesystems 100 ist die Bildaufnahmekamera 113 ausgebildet, die erste Bildaufnahme 201 und die zweite Bildaufnahme 203 als mehrfarbige Bildaufnahmen, insbesondere als RGB-Bildaufnahmen, aufzunehmen. Dabei können die erste Bildaufnahme 201 und/oder die zweite Bildaufnahme 203 durch eine Mischung von Farbkanälen, insbesondere durch eine Mischung eines roten Farbkanals, eines grünen Farbkanals und eines blauen Farbkanals der RGB-Bildaufnahme, mehrfarbig sein.

Die Bildaufnahmekamera 113 kann ferner ausgebildet sein, die Bilder im Bayer-RGB-Format aufzunehmen. Das Bayer-RGB-Format ist ein in digitalen Kamerasensoren häufig verwendetes Format und zeichnet sich dadurch aus, dass an jeder Bildpixelposition eine rote, eine grüne oder eine blaue Farbkomponente, aufgenommen wird.

Gemäß einer Ausführungsform ist der Prozessor 115 ausgebildet, die Bilddaten vom Bayer-RGB-Format in ein sRGB-Bildformat zu konvertieren. Hierzu kann der Prozessor 115 nach dem Aufnehmen 303 der ersten Bildaufnahme 201 und/oder der zweiten Bildaufnahme 203 im Bayer-RGB-Format die folgenden Bildbearbeitungsschritte durchlaufen: Ersetzen defekter Bildpixel, Schwarzwert-Subtraktion, Weißwert-Korrektur, Demosaicing, Farbkorrektur, Gammakorrektur, Speichern der ersten Bildaufnahme und/oder zweiten Bildaufnahme in dem Speicher 121, Entfernen der Lichtreflexion bzw. des Glanzlichtes, Gammakorrektur. Das Entfernen der Lichtreflexion bzw. des Glanzlichtes kann im linearen RGB-Farbraum gemäß der Verfahren 300, 400 erfolgen.

Der Prozessor 115 kann ausgebildet sein, die Lichtreflexion in dem Bildabschnitt 205 der mehrfarbigen ersten Bildaufnahme 201 oder den weiteren Bildabschnitt 207 der mehrfarbigen zweiten Bildaufnahme 203 für jeden Farbkanal des RGB-Farbraums getrennt zu erfassen. Der Prozessor 115 kann ferner ausgebildet sein, die Lichtreflexion in dem Bildabschnitt 205 der ersten Bildaufnahme 201 oder dem weiteren Bildabschnitt 207 der zweiten Bildaufnahme 203 zu erfassen, wenn die Lichtreflexion in zumindest einem Farbkanal der ersten Bildaufnahme 201 oder der zweiten Bildaufnahme 203 vorliegt.

Fig. 4 zeigt ein Ablaufdiagramm eines Verfahrens 500 zur Bildaufnahme des Identifikationsdokuments gemäß einer Ausführungsform, wobei die Lichtreflexion bei dem Verfahren 500 für die drei Farbkanäle Rot, Grün und Blau getrennt erfasst wird.

Das Verfahren 500 umfasst ein Aufnehmen 501a der ersten Bildaufnahme 201 bei Beleuchtung mit dem ersten Licht 109 und ein Aufnehmen 501b der zweiten Bildaufnahme 203 bei Beleuchtung mit dem zweiten Licht 111, ein Erzeugen 503 des Differenzbildes 209 der ersten Bildaufnahme 201 und der zweiten Bildaufnahme 203 oder des weiteren Differenzbildes 211 der zweiten Bildaufnahme 203 und der ersten Bildaufnahme 201, ein Aufspalten 505 des jeweiligen Differenzbildes 209, 211 in die Farbkanäle Rot, Grün und Blau, ein Auswerten des jeweiligen Differenzbildes 209, 211 im roten Farbkanal mittels des Schwellwertverfahrens 507a und anschließend des Dilatationsverfahrens 509a, ein Auswerten des jeweiligen Differenzbildes 209, 211 im grünen Farbkanal mittels des Schwellwertverfahrens 507b und anschließend des Dilatationsverfahrens 509b und, ein Auswerten des jeweiligen Differenzbildes 209, 211 im blauen Farbkanal mittels des Schwellwertverfahrens 507c und anschließend des Dilatationsverfahrens 509c.

Das Verfahren 500 umfasst ferner ein Erfassen 511 der Lichtreflexion oder der weiteren Lichtreflexion in dem Bildabschnitt 205 oder dem weiteren Bildabschnitt 207 mittels einer ODER-Verknüpfung der Differenzbilder im roten, grünen und blauen Farbkanal. Dabei wird die Lichtreflexion in dem jeweiligen Bildabschnitt 205, 207 erfasst, wenn die Lichtreflexion in dem entsprechenden Bildabschnitt 205, 207 in zumindest einem der Farbkanäle vorliegt. Anschließend erfolgt ein Erzeugen 513 der korrigierten ersten Bildaufnahme 217 oder der korrigierten zweiten Bildaufnahme 219.

Das Verfahren 500 umfasst ferner ein Überprüfen 515 ob beide Differenzbilder 209, 211 entsprechend der Verfahrensschritte 503 bis 509a-c prozessiert wurden und ob die korrigierte erste Bildaufnahme 217 und die korrigierte zweite Bildaufnahme 219 vorliegen. Sollte dies nicht der Fall sein, so erfolgt ein Vertauschen 517 der ersten Bildaufnahme 201 und der zweiten Bildaufnahme 203 zum Erzeugen 503 des fehlenden Differenzbildes. Wurden beide Differenzbilder 209, 211 prozessiert, so erfolgt ein Mitteln 519 der korrigierten ersten Bildaufnahme 217 und der korrigierten zweiten Bildaufnahme 219 und auf der Basis der Mittelung das Erzeugen 521 der korrigierten Bildaufnahme 411 des Identifikationsdokuments 101.

Durch die getrennte Erfassung der Lichtreflexion in den Farbkanälen kann eine Erkennung von Hologrammen, die sich nur in bestimmten Farbkanälen deutlich abheben, ermöglicht werden. Wird die Lichtreflexion bzw. das Glanzlicht an einem Bildpixel in mindestens einem Farbkanal der ersten Bildaufnahme 201 bzw. der zweiten Bildaufnahme 203 erkannt, so wird dieser Bildpixel durch den entsprechenden Bildpixel der zweiten Bildaufnahme 203 bzw. der ersten Bildaufnahme 201 ersetzt.

Das Verfahren 500 zur Bildaufnahme des Identifikationsdokuments kann anstatt auf der Basis der Bildaufnahmen 201, 203 im sRGB-Format auch direkt auf der Basis der Bildaufnahmen 201, 203 im Bayer-RGB-Format durchgeführt werden. Dies kann zu einem Laufzeitvorteil führen, da die Berechnungen in diesem Fall nur auf einem einkanaligen Bild durchgeführt werden. Da die Farben auf einer Bildaufnahme im Bayer-RGB-Format getrennt sind, können auf diese Art und Weise ebenfalls einfarbige Hologramme erkannt werden.

Bei Auswertung der Bildaufnahmen 201, 203 im Bayer-RGB-Format kann das Verfahren 500 wie folgt angepasst werden: Auf den Bildaufnahmen 201, 203 im Bayer-RGB-Format werden zunächst die Schritte Ersetzen defekter Bildpixel, Schwarzwert-Subtraktion und Weißwert-Korrektur durchgeführt. Anschließend erfolgt direkt das Entfernen der Lichtreflexion bzw. des Glanzlichtes. Weitere Bildbearbeitungsschritte, wie beispielsweise das Demosaicing, die Farbkorrektur oder die Gammakorrektur, können nach dem Entfernen der Lichtreflexion bzw. des Glanzlichtes durchgeführt werden. Das Entfernen der Lichtreflexion kann gemäß den Verfahrensschritten des Verfahrens 500 erfolgen, wobei auf das Auspalten 505 des Differenzbildes 209 in die Farbkanäle Rot, Grün und Blau und die Dilatation verzichtet werden kann.

Das Verfahren 500 kann von dem Bildaufnahmesystem 100 durchgeführt werden.

### Bezugszeichenliste

- 100: Bildaufnahmesystem
- 101: Identifikationsdokument
- 103: Dokumentenauflage
- 105: Beleuchtungseinrichtung
- 107: Beleuchtungseinrichtung
- 109: erstes Licht
- 111: zweites Licht
- 113: Bildaufnahmekamera
- 115: Prozessor
- 117: erste Lichtquelle
- 119: zweite Lichtquelle
- 121: Speicher

- 201: erste Bildaufnahme
- 203: zweite Bildaufnahme
- 205: Bildabschnitt
- 207: weiterer Bildabschnitt
- 209: Differenzbild
- 211: weiteres Differenzbild
- 213: Überlagerungsbild
- 215: weiteres Überlagerungsbild
- 217: korrigierte erste Bildaufnahme
- 219: korrigierte zweite Bildaufnahme

- 300: Verfahren zur Bildaufnahme des Identifikationsdokuments
- 301: Beleuchten
- 303: Aufnehmen
- 305: Erfassen
- 307: Überlagern

- 400: Verfahren zur Bildaufnahme des Identifikationsdokuments
- 401: Differenzbildberechnung
- 403: Schwellwertsegmentierung
- 405a,b: Erzeugen von Überlagerungsbildern
- 407a,b: Überlagern der Bildaufnahmen
- 409: Bildaddition
- 411: korrigierte Bildaufnahme des Identifikationsdokuments

- 500: Verfahren zur Bildaufnahme des Identifikationsdokuments mit getrennter Erfassung der Lichtreflexion in den Farbkanälen Rot, Grün und Blau
- 501a: Aufnehmen der ersten Bildaufnahme
- 501b: Aufnehmen der zweiten Bildaufnahme
- 503: Erzeugen des Differenzbildes
- 505: Aufspalten in Farbkanäle
- 507a: Schwellwertverfahren Farbkanal Rot
- 507b: Schwellwertverfahren Farbkanal Grün
- 507c: Schwellwertverfahren Farbkanal Blau
- 509a: Dilatation Farbkanal Rot
- 509b: Dilatation Farbkanal Grün
- 509c: Dilatation Farbkanal Blau
- 511: Erfassen der Lichtreflexion
- 513: Erzeugen der korrigierten ersten oder zweiten Bildaufnahme
- 515: Überprüfen der Differenzbilder
- 517: Vertauschen der Bildaufnahmen
- 519: Mitteln der korrigierten ersten und zweiten Bildaufnahme
- 521: Erzeugen der korrigierten Bildaufnahme des Identifikationsdokuments

## Patentansprüche

1. Bildaufnahmesystem (100) zur Bildaufnahme eines Identifikationsdokuments (101), mit
einer Dokumentenauflage (103) für das Identifikationsdokument (101);
einer Beleuchtungseinrichtung (105, 107) zum Beleuchten der Dokumentenauflage (103) mit einem ersten Licht (109) und einem zweiten Licht (111);
einer Bildaufnahmekamera (113), welche ausgebildet ist, eine erste Bildaufnahme (201) des Identifikationsdokuments (101) bei Beleuchtung mit dem ersten Licht (109) und eine zweite Bildaufnahme (203) des Identifikationsdokuments (101) bei Beleuchtung mit dem zweiten Licht (111) aufzunehmen; und
einem Prozessor (115), welcher ausgebildet ist, zur Erfassung der Lichtreflexion ein Differenzbild (209) der ersten Bildaufnahme (201) und der zweiten Bildaufnahme (203) zu erzeugen, und die Lichtreflexion in dem entsprechenden Bildabschnitt (205) des Differenzbildes (209) zu erfassen, wenn eine Bildcharakteristik in dem Bildabschnitt (205) des Differenzbildes (209) einen Schwellwert erreicht,
wobei der Prozessor (115) ausgebildet ist, eine Lichtreflexion in einem Bildabschnitt (205) der ersten Bildaufnahme (201) zu erfassen, und ansprechend auf die Erfassung der Lichtreflexion den Bildabschnitt (205) der ersten Bildaufnahme (201) mit einem entsprechenden Bildabschnitt der zweiten Bildaufnahme (203) zu überlagern, um eine korrigierte erste Bildaufnahme (217) zu erhalten.

2. Bildaufnahmesystem (100) nach Anspruch 1, wobei der Prozessor (115) ausgebildet ist, bei Erfassung der Lichtreflexion in dem Bildabschnitt (205) ein Überlagerungsbild (213) des Bildabschnitts (205) zu erzeugen, und wobei der Prozessor (115) ausgebildet ist, in dem Überlagerungsbild (213) Bildpunkte des Bildabschnitts (205) der ersten Bildaufnahme (201) durch Bildpunkte des entsprechenden Bildabschnitts der zweiten Bildaufnahme (203) zu ersetzen, um ein verarbeitetes Überlagerungsbild (213) mit Bildpunkten des entsprechenden Bildabschnitts der zweiten Bildaufnahme (203) zu erhalten.

3. Bildaufnahmesystem (100) nach Anspruch 2, wobei der Prozessor (115) ausgebildet ist, die erste Bildaufnahme (201) mit dem verarbeiteten Überlagerungsbild (213) der ersten Bildaufnahme (201) zu überlagern, um die korrigierte erste Bildaufnahme (217) zu erhalten.

4. Bildaufnahmesystem (100) nach einem der vorstehenden Ansprüche, wobei der Prozessor (115) ausgebildet ist, eine weitere Lichtreflexion in einem weiteren Bildabschnitt (207) der zweiten Bildaufnahme (203) zu erfassen, und ansprechend auf die Erfassung der weiteren Lichtreflexion den weiteren Bildabschnitt (207) der zweiten Bildaufnahme (203) mit einem entsprechenden weiteren Bildabschnitt der ersten Bildaufnahme (201) zu überlagern, um eine korrigierte zweite Bildaufnahme (219) zu erhalten.

5. Bildaufnahmesystem (100) nach Anspruch 4, wobei der Prozessor (115) ausgebildet ist, die korrigierte erste Bildaufnahme (217) und die korrigierte zweite Bildaufnahme (219) zu kombinieren, insbesondere mittels Mittelung der jeweiligen Bildpunkte zu kombinieren, um eine korrigierte Bildaufnahme (411) des Identifikationsdokuments (101) zu erhalten.

6. Bildaufnahmesystem (100) nach einem der vorstehenden Ansprüche, wobei die Bildaufnahmekamera (113) ausgebildet ist, die erste Bildaufnahme (201) und die zweite Bildaufnahme (203) als mehrfarbige Bildaufnahmen, insbesondere als RGB-Bildaufnahmen, aufzunehmen.

7. Bildaufnahmesystem (100) nach Anspruch 6, wobei die erste Bildaufnahme (201) durch eine Mischung von Farbkanälen mehrfarbig ist, wobei der Prozessor (115) ausgebildet ist, die Lichtreflexion in dem Bildabschnitt (205) für jeden Farbkanal der mehrfarbigen ersten Bildaufnahme (201) getrennt zu erfassen, wobei der Prozessor (115) ausgebildet ist, die Lichtreflexion in dem Bildabschnitt (205) der ersten Bildaufnahme (201) zu erfassen, wenn die Lichtreflexion in zumindest einem Farbkanal vorliegt.

8. Bildaufnahmesystem (100) nach einem der vorstehenden Ansprüche, wobei die Beleuchtungseinrichtung (105, 107) eine erste Lichtquelle (117) zum Erzeugen des ersten Lichtes (109) und eine zweite Lichtquelle (119) zum Erzeugen des zweiten Lichtes (111) umfasst, wobei die erste Lichtquelle (117) und die zweite Lichtquelle (119) an gegenüberliegenden Seiten der Bildaufnahmekamera (113) angeordnet sind.

9. Bildaufnahmesystem (100) nach einem der vorstehenden Ansprüche, wobei die Beleuchtungseinrichtung (105, 107) ausgebildet ist, die Dokumentenauflage (103) mit dem ersten Licht (109) aus einem ersten Beleuchtungswinkel und mit dem zweiten Licht (111) aus einem zweiten Beleuchtungswinkel zu beleuchten.

10. Bildaufnahmesystem (100) nach einem der vorstehenden Ansprüche, wobei die Beleuchtungseinrichtung (105, 107) ausgebildet ist, das erste Licht (109) und das zweite Licht (111) sequentiell in der Form von Lichtblitzen zu erzeugen.

11. Bildaufnahmesystem (100) nach einem der vorstehenden Ansprüche, wobei die Beleuchtungseinrichtung (105, 107) ausgebildet ist, das erste Licht (109) und das zweite Licht (111) in einem der folgenden Wellenlängenbereiche zu erzeugen: Weißlicht-Wellenlängenbereich, Infrarot-Wellenlängenbereich, Ultraviolett-Wellenlängenbereich.

12. Bildaufnahmesystem (100) nach einem der vorstehenden Ansprüche, wobei das Bildaufnahmesystem (100) ausgebildet ist, die erste Bildaufnahme (201), die zweite Bildaufnahme (203) und die korrigierte erste Bildaufnahme (217) automatisch in einem Arbeitsgang zu erzeugen.

13. Bildaufnahmesystem (100) nach einem der vorstehenden Ansprüche, wobei das Bildaufnahmesystem (100) einen Speicher (121) zum Speichern der ersten Bildaufnahme (201) und der zweiten Bildaufnahme (203) umfasst.

14. Verfahren (300) zur Bildaufnahme eines Identifikationsdokuments (101), wobei das Identifikationsdokument (101) auf eine Dokumentenauflage (103) auflegbar ist, mit:
Beleuchten (301) der Dokumentenauflage (103) mit einem ersten Licht (109) und einem zweiten Licht (111);
Aufnehmen (303) einer ersten Bildaufnahme (201) des Identifikationsdokuments (101) bei Beleuchtung mit dem ersten Licht (109) und einer zweiten Bildaufnahme (203) des Identifikationsdokuments (101) bei Beleuchtung mit dem zweiten Licht (111);
Erfassen (305) einer Lichtreflexion in einem Bildabschnitt (205) der ersten Bildaufnahme (201); und ansprechend auf die Erfassung der Lichtreflexion,
wobei zum Erfassen der Lichtreflexion ein Differenzbild der ersten Bildaufnahme (201) und der zweiten Bildaufnahme (203) erzeugt wird und die Lichtreflexion in dem entsprechenden Bildabschnitt (205) des Differenzbildes erfasst wird, wenn eine Bildcharakteristik in dem Bildabschnitt (205) des Differenzbildes einen Schwellwert erreicht,
Überlagern (307) des Bildabschnitts (205) der ersten Bildaufnahme (201) mit einem entsprechenden Bildabschnitt der zweiten Bildaufnahme (203), um eine korrigierte erste Bildaufnahme (217) zu erhalten.

## Claims

1. Image recording system (100) for recording an image of an identification document (101), the image recording system (100) comprising:
a document support (103) for the identification document (101);
an illumination device (105, 107) for illuminating the document support (103) with a first light (109) and a second light (111);
an image recording camera (113), which is configured to record a first image recording (201) of the identification document (101) when illuminated with the first light (109) and a second image recording (203) of the identification document (101) when illuminated with the second light (111); and
a processor (115), which is configured to generate a difference image (209) of the first image recording (201) and the second image recording (203) for detecting the light reflection, and to detect the light reflection in the corresponding image section (205) of the difference image (209) when an image characteristic in the image section (205) of the difference image (209) reaches a threshold value,
wherein the processor (115) is configured to detect a light reflection in an image section (205) of the first image recording (201), and, in response to the detection of the light reflection, to overlay the image section (205) of the first image recording (201) with a corresponding image section of the second image recording (203) in order to obtain a corrected first image recording (217).

2. Image recording system (100) according to claim 1, wherein the processor (115) is configured to generate an overlay image (213) of the image section (205) when detecting the light reflection in the image section (205), and wherein the processor (115) is configured to replace image points of the image section (205) of the first image recording (201) in the overlay image (213) with image points of the corresponding image section of the second image recording (203) in order to obtain a processed overlay image (213) with image points of the corresponding image section of the second image recording (203).

3. Image recording system (100) according to claim 2, wherein the processor (115) is configured to overlay the first image recording (201) with the processed overlay image (213) of the first image recording (201) in order to obtain the corrected first image recording (217).

4. Image recording system (100) according to one of the preceding claims, wherein the processor (115) is configured to detect a further light reflection in a further image section (207) of the second image recording (203), and, in response to the detection of the further light reflection, to overlay the further image section (207) of the second image recording (203) with a corresponding further image section of the first image recording (201) in order to obtain a corrected second image recording (219).

5. Image recording system (100) according to claim 4, wherein the processor (115) is configured to combine the corrected first image recording (217) and the corrected second image recording (219), in particular by averaging the respective image points, in order to obtain a corrected image recording (411) of the identification document (101).

6. Image recording system (100) according to one of the preceding claims, wherein the image recording camera (113) is configured to record the first image recording (201) and the second image recording (203) as multicolor image recordings, in particular as RGB image recordings.

7. Image recording system (100) according to claim 6, wherein the first image recording (201) is multicolored by a mixture of color channels, wherein the processor (115) is configured to detect the light reflection in the image section (205) for each color channel of the multicolored first image recording (201) separately, wherein the processor (115) is configured to detect the light reflection in the image section (205) of the first image recording (201) when the light reflection is present in at least one color channel.

8. Image recording system (100) according to one of the preceding claims, wherein the illumination device (105, 107) comprises a first light source (117) for generating the first light (109) and a second light source (119) for generating the second light (111), wherein the first light source (117) and the second light source (119) are arranged on opposite sides of the image recording camera (113).

9. Image recording system (100) according to one of the preceding claims, wherein the illumination device (105, 107) is configured to illuminate the document support (103) with the first light (109) from a first illumination angle and with the second light (111) from a second illumination angle.

10. Image recording system (100) according to one of the preceding claims, wherein the illumination device (105, 107) is configured to generate the first light (109) and the second light (111) sequentially in the form of light flashes.

11. Image recording system (100) according to one of the preceding claims, wherein the illumination device (105, 107) is configured to generate the first light (109) and the second light (111) in one of the following wavelength ranges: white light wavelength range, infrared wavelength range, ultraviolet wavelength range.

12. Image recording system (100) according to one of the preceding claims, wherein the image recording system (100) is configured to automatically generate the first image recording (201), the second image recording (203) and the corrected first image recording (217) in one operation.

13. Image recording system (100) according to one of the preceding claims, wherein the image recording system (100) comprises a memory (121) for storing the first image recording (201) and the second image recording (203).

14. Method (300) for recording an image of an identification document (101), wherein the identification document (101) is placeable on a document support (103), the method (300) comprising:
illuminating (301) the document support (103) with a first light (109) and a second light (111);
recording (303) a first image recording (201) of the identification document (101) when illuminated with the first light (109) and a second image recording (203) of the identification document (101) when illuminated with the second light (111);
detecting (305) a light reflection in an image section (205) of the first image recording (201); and responsive to detecting the light reflection,
wherein a difference image of the first image recording (201) and the second image recording (203) is generated for detecting the light reflection, and the light reflection is detected in the corresponding image section (205) of the difference image when an image characteristic in the image section (205) of the difference image reaches a threshold value,
overlaying (307) the image section (205) of the first image recording (201) with a corresponding image section of the second image recording (203) in order to obtain a corrected first image recording (217).

## Revendications

1. Système d'enregistrement d'images (100) pour enregistrer une image d'un document d'identification (101), le système d'enregistrement d'images (100) comprenant :
un support de document (103) pour le document d'identification (101) ;
un dispositif d'éclairage (105, 107) pour éclairer le support de document (103) avec une première lumière (109) et une seconde lumière (111) ;
une caméra d'enregistrement d'image (113), qui est configurée pour enregistrer un premier enregistrement d'image (201) du document d'identification (101) lorsqu'il est éclairé par la première lumière (109) et un deuxième enregistrement d'image (203) du document d'identification (101) lorsqu'il est éclairé par la seconde lumière (111) ; et
un processeur (115), qui est configuré pour générer une image de différence (209) du premier enregistrement d'image (201) et du deuxième enregistrement d'image (203) pour détecter la réflexion de la lumière, et pour détecter la réflexion de la lumière dans la section d'image correspondante (205) de l'image de différence (209) lorsqu'une caractéristique d'image dans la section d'image (205) de l'image de différence (209) atteint une valeur seuil,
dans lequel le processeur (115) est configuré pour détecter une réflexion de lumière dans une section d'image (205) du premier enregistrement d'image (201) et, en réponse à la détection de la réflexion de lumière, pour superposer la section d'image (205) de le premier enregistrement d'image (201) avec une section d'image correspondante du deuxième enregistrement d'image (203) afin d'obtenir un premier enregistrement d'image corrigé (217).

2. Système d'enregistrement d'images (100) selon la revendication 1, dans lequel le processeur (115) est configuré pour générer une image superposée (213) de la section d'image (205) lors de la détection de la réflexion lumineuse dans la section d'image (205), et dans lequel le processeur (115) est configuré pour remplacer les points d'image de la section d'image (205) du premier enregistrement d'image (201) dans l'image de superposition (213) par des points d'image de la section d'image correspondante du deuxième enregistrement d'image (203) afin d'obtenir une image superposée traitée (213) avec des points d'image de la section d'image correspondante du deuxième enregistrement d'image (203).

3. Système d'enregistrement d'images (100) selon la revendication 2, dans lequel le processeur (115) est configuré pour superposer le premier enregistrement d'image (201) avec l'image de superposition traitée (213) du premier enregistrement d'image (201) afin d'obtenir le premier enregistrement d'image corrigé (217) recevoir.

4. Système d'enregistrement d'images (100) selon l'une des revendications précédentes, dans lequel le processeur (115) est configuré pour détecter une autre réflexion de lumière dans une autre section d'image (207) du deuxième enregistrement d'images (203), et, en en réponse à la détection de la réflexion lumineuse supplémentaire, pour superposer l'autre section d'image (207) du deuxième enregistrement d'image (203) avec une autre section d'image correspondante du premier enregistrement d'image (201) afin d'obtenir un deuxième enregistrement d'image corrigé (219).

5. Système d'enregistrement d'images (100) selon la revendication 4, dans lequel le processeur (115) est configuré pour combiner le premier enregistrement d'image corrigé (217) et le deuxième enregistrement d'image corrigé (219), notamment en faisant la moyenne des points d'image respectifs, afin d'obtenir un enregistrement d'image corrigé (411) du document d'identification (101).

6. Système d'enregistrement d'images (100) selon l'une des revendications précédentes, dans lequel la caméra d'enregistrement d'images (113) est configurée pour enregistrer le premier enregistrement d'images (201) et le deuxième enregistrement d'images (203) sous forme d'enregistrements d'images multicolores, notamment comme enregistrements d'images RVB.

7. Système d'enregistrement d'images (100) selon la revendication 6, dans lequel le premier enregistrement d'image (201) est multicolore par un mélange de canaux de couleur, dans lequel le processeur (115) est configuré pour détecter la réflexion de la lumière dans la section d'image (205) pour chaque canal de couleur du premier enregistrement d'image multicolore (201) séparément, le processeur (115) étant configuré pour détecter la réflexion de la lumière dans la section d'image (205) du premier enregistrement d'image (201) lorsque la réflexion de la lumière est présente dans au moins un canal de couleur.

8. Système d'enregistrement d'images (100) selon l'une des revendications précédentes, dans lequel le dispositif d'éclairage (105, 107) comprend une première source lumineuse (117) pour générer la première lumière (109) et une deuxième source lumineuse (119) pour générer la seconde lumière (111), la première source de lumière (117) et la seconde source de lumière (119) étant disposées sur des côtés opposés de la caméra d'enregistrement d'images (113).

9. Système d'enregistrement d'images (100) selon l'une des revendications précédentes, dans lequel le dispositif d'éclairage (105, 107) est configuré pour éclairer le support de document (103) avec la première lumière (109) sous un premier angle d'éclairage et avec le une seconde lumière (111) à partir d'un second angle d'éclairage.

10. Système d'enregistrement d'images (100) selon l'une des revendications précédentes, dans lequel le dispositif d'éclairage (105, 107) est configuré pour générer la première lumière (109) et la deuxième lumière (111) séquentiellement sous forme de flashs lumineux.

11. Système d'enregistrement d'images (100) selon l'une des revendications précédentes, dans lequel le dispositif d'éclairage (105, 107) est configuré pour générer la première lumière (109) et la deuxième lumière (111) dans l'une des plages de longueurs d'onde suivantes : plage de longueurs d'onde de la lumière blanche, plage de longueurs d'onde infrarouge, plage de longueurs d'onde ultraviolette.

12. Système d'enregistrement d'images (100) selon l'une des revendications précédentes, dans lequel le système d'enregistrement d'images (100) est configuré pour générer automatiquement le premier enregistrement d'images (201), le deuxième enregistrement d'images (203) et le premier enregistrement d'images corrigé (217) en une seule opération.

13. Système d'enregistrement d'images (100) selon l'une des revendications précédentes, dans lequel le système d'enregistrement d'images (100) comprend une mémoire (121) pour stocker le premier enregistrement d'images (201) et le deuxième enregistrement d'images (203).

14. Procédé (300) d'enregistrement d'images d'un document d'identification (101), dans lequel le document d'identification (101) est plaçable sur un support de document (103), le procédé (300) comprenant :
éclairer (301) le support de document (103) avec une première lumière (109) et une seconde lumière (111) ;
enregistrer (303) une première image (201) du document d'identification (101) lorsqu'il est éclairé par la première lumière (109) et une seconde image (203) du document d'identification (101) lorsqu'il est éclairé par la seconde lumière (111) ;
détecter (305) une réflexion de lumière dans une section d'image (205) du premier enregistrement d'image (201) ; et sensible à la détection de la réflexion de la lumière,
dans lequel une image de différence du premier enregistrement d'image (201) et du deuxième enregistrement d'image (203) est générée pour détecter la réflexion de la lumière, et la réflexion de la lumière est détectée dans la section d'image correspondante (205) de l'image de différence lorsqu'une caractéristique d'image dans la section d'image (205), l'image de différence atteint une valeur seuil,
superposer (307) la section d'image (205) du premier enregistrement d'image (201) avec une section d'image correspondante du deuxième enregistrement d'image (203) afin d'obtenir un premier enregistrement d'image corrigé (217).
